# EUROPEAN PATENT APPLICATION

(11) **EP 4 636 846 A1**
(43) Date of publication of application: **22.10.2025**
(21) Application number: 25164168.4
(22) Date of filing: 17.03.2025
(51) Int. Cl.: H01M 4/136, H01M 4/36, H01M 4/58, H01M 4/62, H01M 10/054

(54) **SODIUM COMPENSATION MATERIAL, PREPARATION METHOD THEREOF, POSITIVE ELECTRODE PLATE, AND SODIUM-ION BATTERY**

(30) Priority: 18.03.2024 CN 202410308708
(71) Applicant: Xiamen Hithium Energy Storage Technology Co., Ltd., Xiamen, Fujian 361100 (CN)
(72) Inventor: TU, Long, Xiamen, 361100 (CN); ZHANG, Guodong, Xiamen, 361100 (CN)
(74) Representative: Manitz Finsterwald Patent- und Rechtsanwaltspartnerschaft mbB

(57) **Abstract**

Provided are a sodium compensation material, a preparation method thereof, a positive electrode plate, and a sodium-ion battery. The sodium compensation material includes: a sodium compensation agent NaₓC_{y}O_{z}H_{w}, where 1≤x≤3, 1≤y≤6, 1≤z≤7, and 0≤w≤5; and a metal oxide catalyst. C₀ represents a content of a metallic element belonging to the metal oxide catalyst measured by performing a first Energy Dispersive Spectroscopy (EDS) test on a pre-selected region of a surface of the sodium compensation material, C₁ represents a content of the metallic element belonging to the metal oxide catalyst measured by performing a second EDS test on the pre-selected region after being melted, C₀ and C₁ satisfy C₁>C₀.

## Description

### FIELD

The present disclosure relates to the technical field of electrochemistry, and particularly, to a sodium compensation material, a preparation method thereof, a positive electrode plate, and a sodium-ion battery.

### BACKGROUND

It is promising in the energy storage field that the conventional lithium-ion batteries are going to be replaced by sodium-ion batteries due to their advantages such as low cost, abundant sodium resources, relatively high energy density, and the like.

By supplementing sodium to a positive electrode plate using a positive sodium compensation agent, the adverse effects on the electrochemical performance of the sodium-ion battery caused by sodium loss can be reduced. However, the existing positive sodium compensation agent still have the problem of high oxidation decomposition potential, which limits the actual sodium compensation effect of the positive sodium compensation agent in the sodium ion batteries. It is urgent to enhance the performances of the sodium ion batteries.

### SUMMARY

In order to solve the above technical problems, the present disclosure provides a sodium compensation material, a preparation method thereof, a positive electrode plate, and a sodium-ion battery, to improve performances of the sodium-ion battery.

In a first aspect, the present disclosure provides a sodium compensation material. The sodium compensation material includes: a sodium compensation agent NaₓC_{y}O_{z}H_{w}, where 1≤x≤3, 1≤y≤6, 1≤z≤7, and 0≤w≤5; and a metal oxide catalyst. C₀ represents a content of a metallic element belonging to the metal oxide catalyst measured by performing a first Energy Dispersive Spectroscopy (EDS) test on a pre-selected region of a surface of the sodium compensation material, and C₁ represents a content of the metallic element belonging to the metal oxide catalyst measured by performing a second EDS test on the pre-selected region after being melted, C₀ and C₁ satisfyingC₁>C₀.

In some embodiments of the present disclosure, the sodium compensation material has a composite structure of the metal oxide catalyst coated with the sodium compensation agent.

In some embodiments of the present disclosure, the sodium compensation material has an oxidation decomposition potential of Eₚₐ satisfying 4.10 V≤Eₚₐ≤4.20 V.

In some embodiments of the present disclosure, the sodium compensation material has an average particle size D50 ranging from 0.8 µm to 2 µm.

In some embodiments of the present disclosure, based on a mass of the sodium compensation material, a mass percentage of the sodium compensation agent ranges from 70% to 95%, and a mass percentage of the metal oxide catalyst ranges from 5% to 30%.

In some embodiments of the present disclosure, the sodium compensation agent is selected from at least one of CH₃COONa, C₆H₅Na₃O₇, Na₂C₄O₄, Na₂CO₃, Na₂C₂O₄, and Na₂C₆O₆.

In some embodiments of the present disclosure, the metal oxide catalyst is selected from at least one of titanium dioxide, ruthenium dioxide, manganese dioxide, molybdenum dioxide, tricobalt tetraoxide, triiron tetraoxide, and tin dioxide.

In a second aspect, the present disclosure provides a preparation method of the sodium compensation material according to the first aspect. The preparation method includes: mixing a sodium compensation agent treated by particle size regulation and an alcohol-based solvent, to obtain a dispersion solution, where the sodium compensation agent treated by particle size regulation has an average particle size D50 ranging from 1 µm to 3 µm; adding a precursor of a catalyst to the dispersion solution for mixing, and drying, to obtain a mixture; and calcining the mixture in a gas atmosphere, to obtain the sodium compensation material, where a calcination temperature ranges from 300°C to 500°C, and where a calcination duration ranges from 1 hour to 6 hours.

In some embodiments of the present disclosure, the method further includes: regulating particle size distribution of the sodium compensation agent by a recrystallization treatment, a ball milling treatment, a crushing treatment, or a spray drying treatment, to obtain the sodium compensation agent treated by particle size regulation.

In some embodiments of the present disclosure, the precursor of the catalyst is selected from at least one of tetrabutyl titanate, manganese diethylhexanoate, iron diethylhexanoate, copper diethylhexanoate, cobalt 2-ethylhexanoate, nickel diethylhexanoate, and stannous diethylhexanoate.

In some embodiments of the present disclosure, the alcohol-based solvent is selected from at least one of methanol, ethanol, and ethylene glycol.

In some embodiments of the present disclosure, the gas atmosphere includes any one of argon, nitrogen, and air.

In a third aspect, the present disclosure provides a positive electrode plate. The positive electrode plate includes a current collector and a positive active material layer disposed on at least one surface of the current collector. The positive active material layer includes the sodium compensation material according to the first aspect or the sodium compensation material prepared by the preparation method according to the second aspect.

In a fourth aspect, the present disclosure provides a sodium-ion battery. The sodium-ion battery includes the positive electrode plate according to the third aspect.

In a fifth aspect, the present disclosure provides a battery pack. The battery pack includes a casing and at least one sodium-ion battery according to the fourth aspect. The sodium-ion battery is accommodated in the casing.

In a sixth aspect, the present disclosure provides an electrical device. The electrical device includes the sodium-ion battery according to the fourth aspect or the battery pack according to the fifth aspect.

Compared with the prior art, the present disclosure has at least the following beneficial effects.

The present disclosure provides a sodium compensation material, a preparation method thereof, a positive electrode plate, and a sodium-ion battery. The sodium compensation material includes the sodium compensation agent NaₓC_{y}O_{z}H_{w} and the metal oxide catalyst. The sodium compensation material satisfies C₁>C₀, where C₀ represents the content of the metallic element belonging to the metal oxide catalyst measured by performing the first EDS test on a pre-selected region of the surface of the sodium compensation material, and C₁ represents the content of the metallic element belonging to the metal oxide catalyst measured by performing the second EDS test on the pre-selected region after being melted. The sodium compensation material with the above characteristics is conducive to electron transfer, allowing the sodium compensation material to have a low oxidation decomposition potential, thereby improving a first cycle sodium compensation effect of the sodium compensation material. Thus, the energy density and cycle performance of the sodium-ion battery can be improved.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings can be obtained according to these drawings without creative labor.
FIG. 1 is a schematic structural view of a household energy storage system according to an embodiment of the present disclosure.
FIG. 2 is a schematic structural view of an energy storage system according to an embodiment of the present disclosure.
FIG. 3 is a scanning electron microscope (SEM) image of a sodium compensation material prepared in Example 1.
FIG. 4 is an SEM image of a sodium compensation material prepared in Comparative Example 4.
FIG. 5 is a differential capacity dQ/dV curve graph of a first button cell of Example 1 during a first cycle charge process.
FIG. 6 is a differential capacity dQ/dV curve graph of a first button cell of Comparative Example 1 during a first cycle charge process.
FIG. 7 is a first cycle charge and discharge curve of a second button cell of Example 1.
FIG. 8 is a first cycle charge and discharge curve of a second button cell of Comparative Example 3.

Reference numerals: 1-energy storage device, 2-electric energy conversion device, 3-first user load, 4-second user load, 400-energy storage system, 410-high voltage cable, 420-first electric energy conversion device, 430-second electric energy conversion device.

### DETAILED DESCRIPTION

Reference will be made clearly and completely to the technical solutions in the embodiments of the present disclosure with accompanying drawings. The embodiments described herein are only part of the embodiments of the present disclosure and are not all embodiments of the present disclosure. Based on the embodiments of the present disclosure, other embodiments obtained by those skilled in the art without creative labor are within scope of the present disclosure.

In the present disclosure, the orientation or position relationships indicated by the terms "on", "down", "left", "right", "front", "back", "top", "bottom", "inside", "outside", "vertical", "horizontal", "lateral", and "longitudinal" are based on the orientation or position relationships shown in the drawings. These terms are mainly for the convenience of describing the present disclosure and embodiments thereof, rather than indicating that the pointed device, element, or component must have a specific orientation, or be constructed and operated in a specific orientation.

Moreover, some of the above terms may be used to indicate other meanings in addition to the orientation or position relationship. For example, the term "on" may also be used to indicate a certain dependency or connection relationship in certain circumstances. For those skilled in the art, the specific meanings of these terms in the present disclosure may be understood according to specific circumstances.

In addition, the terms "install", "dispose", "provided with", "connect", and "connect with" should be understood in broad sense. For example, they may refer to a fixed connection, a detachable connection, or an integral structure; they may refer to a mechanical connection or an electrical connection; they may refer to a direct connection or an indirect connection through an intermediate medium, or they may refer to an internal connection between two devices, elements, or components. For those skilled in the art, the specific meanings of the above terms in the present disclosure can be understood according to specific circumstances.

In addition, the terms "first", "second", etc. are mainly used to distinguish different devices, elements, or components (which may be of the same or different specific type and configuration), and are not used to indicate or imply the relative importance and number of the indicated devices, elements, or components. Unless otherwise specified, "a plurality of" means two or more.

The present disclosure provides a sodium compensation material. The sodium compensation material includes: a sodium compensation agent NaₓC_{y}O_{z}H_{w}, where 1≤x≤3, 1≤y≤6, 1≤z≤7, 0≤w≤5; and a metal oxide catalyst. The sodium compensation material satisfies C₁>C₀, where C₀ represents a content of a metallic element belonging to the metal oxide catalyst measured by performing a first EDS test on a pre-selected region of a surface of the sodium compensation material, and C₁ represents a content of the metallic element belonging to the metal oxide catalyst measured by performing a second EDS test on the pre-selected region after being melted. The sodium compensation material of the present disclosure has the above-mentioned characteristics, when being melted, can provide more exposed metal oxide catalyst, indicating that the metal oxide catalyst in the sodium compensation material of the present disclosure is effectively coated by the sodium compensation agent. Such a coating structure is conducive to electron transfer, which enables the sodium compensation material to have a low oxidation decomposition potential, thereby improving a first cycle sodium compensation effect of the sodium compensation material. The sodium compensation material of the present disclosure can release additional sodium ions during a first cycle charge of a sodium-ion battery, thereby compensating for sodium-ion loss, which may be caused by the formation of an SEI film at a negative electrode plate and other side reactions. In this way, the energy density and cycle performance of the sodium-ion battery can be improved.

In the present disclosure, the pre-selected region may be any pre-selected region of the surface of the sodium compensation material. For example, the pre-selected region may be a rectangular region of 500 nm×500 nm, or a circular region with an area ranging from 0.25 µm² to 1 µm². After the first EDS test is performed, a heat treatment can be performed on the pre-selected region for 5 minutes to 10 minutes to melt the sodium compensation material in the pre-selected region, and then the second EDS test can be performed on the melted pre-selected region. The present disclosure has no particular limitation on a method of the heat treatment, as long as the sodium compensation material can be melted. For example, the pre-selected region may be subjected to the heat treatment by means of an SEM device at an accelerating voltage of 10 kV or 20 kV.

It will be appreciated that the content of each element in the sodium compensation material, such as the content of the metallic element of the metal oxide catalyst, can be quantitatively analyzed by the EDS test. In one example, the metal oxide catalyst is titanium dioxide (TiO₂), and the content of element titanium can be obtained after the first EDS test, recorded as C₀, and the content of element titanium can be obtained after the second EDS test, recorded as C₁.

In some embodiments of the present disclosure, the sodium compensation material has a composite structure of the metal oxide catalyst coated with the sodium compensation agent. The sodium compensation material with such a composite structure is conducive to electron transfer, such that the sodium compensation material can have a low oxidation decomposition potential, thereby improving the first cycle sodium compensation effect of the sodium compensation material. In addition, additional sodium ions can be released during the first cycle charge of the sodium-ion battery, thereby improving the energy density and cycle performance of the sodium-ion battery.

In some embodiments of the present disclosure, the sodium compensation material has an oxidation decomposition potential of Eₚₐ satisfying 4.10 V≤Eₚₐ≤4.20 V. For example, the oxidation decomposition potential may be 4.10 V, 4.12 V, 4.14 V, 4.15 V, 4.16 V, or 4.20 V. Compared to the existing sodium compensation materials, the sodium compensation material of the present disclosure has a lower oxidation decomposition potential, which can improve the first cycle sodium compensation effect and reduce the first cycle irreversible capacity loss of the sodium-ion battery, thereby improving a first cycle coulombic efficiency of the sodium-ion battery.

In the present disclosure, the oxidation decomposition potential refers to a potential at which an oxidation decomposition reaction of the sodium compensation material occurs during the charge process.

In some embodiments of the present disclosure, the sodium compensation material has an average particle size D50 ranging from 0.8 µm to 2 µm. For example, the average particle size D50 may be 0.8 µm, 1 µm, 1.2 µm, 1.5 µm, 1.8 µm, or 2 µm. By controlling the average particle size D50 of the sodium compensation material within the above range, an electron transmission distance between the sodium compensation material particles can be effectively shortened, thereby promoting the oxidation decomposition process of the sodium compensation agent, which is beneficial to reducing the oxidation decomposition potential of the sodium compensation material.

In some embodiments of the present disclosure, based on a mass of the sodium compensation material, a mass percentage of the sodium compensation agent ranges from 70% to 95%, and a mass percentage of the metal oxide catalyst ranges from 5% to 30%. For example, the mass percentage of the sodium compensation agent may be 70%, 75%, 80%, 85%, 90%, or 95%; and the mass percentage of the metal oxide catalyst may be 5%, 10%, 15%, 20%, 25%, or 30%. By controlling the mass percentages of the sodium compensation agent and the metal oxide catalyst in the sodium compensation material within the above ranges, the content of the sodium compensation agent is higher than the content of the metal oxide catalyst, which is conducive to forming the composite structure that the metal oxide catalyst is coated with the sodium compensation agent.

In some embodiments of the present disclosure, the sodium compensation agent is selected from at least one of CH₃COONa, C₆H₅Na₃O₇, Na₂C₄O₄, Na₂CO₃, Na₂C₂O₄, or Na₂C₆O₆. The sodium compensation agent has the advantages of environmentally friendly, abundant sources, and safe and non-toxic.

In some embodiments of the present disclosure, the metal oxide catalyst is selected from at least one of titanium dioxide, ruthenium dioxide, manganese dioxide, molybdenum dioxide, tricobalt tetraoxide, triiron tetraoxide, or tin dioxide. The above metal oxides may act as electron acceptors for accepting electrons, which is beneficial to forming the composite structure that the metal oxide catalyst is coated with the sodium compensation agent.

In a second aspect, the present disclosure provides a preparation method of the sodium compensation material according to the first aspect. The preparation method includes: preparation of a dispersion solution, preparation of a mixture, and preparation of the sodium compensation material. In the preparation of a dispersion solution, a sodium compensation agent treated by particle size regulation and an alcohol-based solvent are mixed, to obtain the dispersion solution. The sodium compensation agent treated by particle size regulation has an average particle size D50 ranging from 1 µm to 3 µm. In the preparation of a mixture, a precursor of a catalyst is added to the dispersion solution for mixing, and dried, to obtain the mixture. In the preparation of the sodium compensation material, the mixture is calcined in a gas atmosphere, to obtain the sodium compensation material. A calcination temperature ranges from 300°C to 500°C, and a calcination duration ranges from 1 hour to 6 hours.

In the preparation of the dispersion solution, the sodium compensation agent within the above-mentioned particle size range may be obtained through the particle size regulation. The inventors have found that a specific surface area of the sodium compensation agent increases with a decrease in the particle size of the sodium compensation agent. During the subsequent preparation of the mixture, the dispersion solution formed by dissolving the precursor of the catalyst in the alcohol-based solvent can be more evenly distributed on the surface of the sodium compensation agent. The inventors have found based on further research that the uniformity of the coating structure of the sodium compensation material obtained after the calcination may be affected by the uniformity of the mixing the precursor of the catalyst and the sodium compensation agent. In this regard, in the present disclosure, the sodium compensation agent treated by particle size regulation is adopted to prepare the sodium compensation material, which allows the coating structure of the sodium compensation material to be more uniform, thereby improving a catalytic efficiency of the metal oxide catalyst in the sodium compensation material and lowering the oxidation decomposition potential of the sodium compensation material.

During the preparation of the mixture, by using the precursor of the catalyst rather than directly using the metal oxide catalyst, the sodium compensation agent and the precursor of the catalyst can be mixed evenly at a nanoscale level, which is beneficial to improving the uniformity of the coating structure of the sodium compensation material.

During the preparation of the sodium compensation material, through the calcination process of the present disclosure (i.e., by controlling the calcination temperature and the calcination duration within the above-mentioned range), a transition metal oxide produced in a thermal decomposition process of a metal alkoxide can be introduced into the sodium compensation agent. At the same time, the precursor of the catalyst undergoes a thermal decomposition reaction to form a transition metal oxide, and other components (such as small organic molecules, carbon monoxide, carbon dioxide, and water, etc.) produced by the thermal decomposition reaction are vaporized. In addition, the sodium compensation agent melts at this temperature, and the metal oxide catalyst is evenly dispersed in the melted sodium compensation agent, allowing the sodium compensation agent to evenly coat the metal oxide catalyst. In this way, the composite structure that the metal oxide catalyst is coated with the sodium compensation agent, which is conducive to the electron transfer, can be formed.

During the preparation of the sodium compensation material, the product obtained after the calcination process may be crushed by a crusher and then sieved, to obtain the sodium compensation material having a particle size within a desired range.

In some embodiments of the present disclosure, the preparation method of the sodium compensation material further includes: regulating the particle size distribution of the sodium compensation agent by a recrystallization treatment, a ball milling treatment, a crushing treatment, or a spray drying treatment, to obtain the sodium compensation agent treated by particle size regulation.

According to the present disclosure, the particle size of the sodium compensation agent can be reduced by the treatments such as the recrystallization treatment, the ball milling treatment, the crushing treatment, or the spray drying treatment. The inventors have found that commercially available sodium compensation agent has a deficiency of great particle size, and the recrystallization treatment can effectively reduce the particle size of the sodium compensation agent. For example, the particle size of the sodium compensation agent can be regulated by the recrystallization treatment through the following steps: adding commercially available sodium compensation agent powder into deionized water, and stirring to completely dissolve the sodium compensation agent, to obtain a nearly saturated sodium compensation agent solution; adding anhydrous ethanol to the sodium compensation agent solution, and stirring to generate a precipitate; filtering and washing the precipitate with anhydrous ethanol, then performing vacuum drying on the precipitate at a temperature ranging from 110°C to 130°C for 24 hours to 36 hours, to obtain a recrystallized sodium compensation material; and sieving the recrystallized sodium compensation material. In this way, the sodium compensation material with a desired particle size can obtained.

In some embodiments of the present disclosure, the precursor of the catalyst is selected from at least one of tetrabutyl titanate, manganese diethylhexanoate, iron diethylhexanoate, copper diethylhexanoate, cobalt 2-ethylhexanoate, nickel diethylhexanoate, or stannous diethylhexanoate. The above-mentioned precursor of the catalyst contains transition metallic elements or post-transition metallic elements, and the transition metal oxide produced by the thermal decomposition process of the organic metal salt can be introduced into the sodium compensation agent in the subsequent preparation steps, to form the composite structure that the metal oxide catalyst is coated with the sodium compensation agent that is beneficial to the electron transfer.

In some embodiments of the present disclosure, the alcohol-based solvent is selected from at least one of methanol, ethanol, or ethylene glycol, which is conducive to the dissolution of the precursor of the catalyst.

The present disclosure has no particular limitation on the gas atmosphere during the calcination process, as long as the purpose of the present disclosure can be achieved. In some embodiments of the present disclosure, the gas atmosphere includes any one of argon, nitrogen, and air.

The preparation method of the sodium compensation material according to the present disclosure is based on calcining the sodium compensation agent treated by particle size regulation and the precursor of the catalyst, allowing the coating structure of the sodium compensation material to be more uniform, which is conducive to obtaining the sodium compensation material with better sodium compensation performance. In addition, the preparation method according to the present disclosure is simple in process, and the prepared sodium compensation material has excellent sodium compensation performance and low cost, thereby reducing the production cost of the sodium-ion battery while improving the energy density and cycle performance of the sodium-ion battery.

The present disclosure further provides a positive electrode plate. The positive electrode plate includes a current collector and a positive active material layer disposed on at least one surface of the current collector. The positive active material layer includes the sodium compensation material according to any one of the above-mentioned embodiments or the sodium compensation material prepared by the preparation method according to any one of the above-mentioned embodiments.

The positive active material layer of the present disclosure may be arranged on one surface or both surfaces of the positive current collector in a thickness direction. In the present disclosure, the positive active material layer is arranged on the surface of the positive current collector, that is, the positive active material layer may be arranged in a partial area of one surface of the positive current collector or may be arranged in the entire area of one surface of the positive current collector. The present disclosure has no particular limitation on the positive current collector, as long as the purpose of the present disclosure can be achieved. For example, the positive current collector may include, but is not limited to, an aluminum foil, an aluminum alloy foil, or a composite current collector. In the present disclosure, there is no particular limitation on the thickness of the positive current collector, as long as the purpose of the present disclosure can be achieved. For example, the thickness ranges from 8 µm to 13 µm. The thickness of the positive active material layer of the present disclosure may range from 150 µm to 400 µm.

In the present disclosure, the positive active material layer may further include a positive active material. The present disclosure has no particular limitation on the positive active material, as long as the purpose of the present disclosure can be achieved. For example, the positive active material may include at least one of sodium nickel manganate, sodium nickel iron manganate, sodium ferric sulfate, sodium vanadium phosphate, sodium copper iron manganate, or ferric sodium pyrophosphate.

In the present disclosure, the positive active material layer may further include a positive conductive agent. The present disclosure has no particular limitation on the positive conductive agent, as long as the purpose of the present disclosure can be achieved. For example, the positive conductive agent may include, but is not limited to, at least one of conductive carbon black (Super P), carbon nanotubes (CNT), Ketjen black (KB), graphene, graphene oxide, or acetylene black. A mass percentage of the conductive agent in the positive active material layer ranges from 10% to 40%. In the present disclosure, the positive active material layer may further include a positive binder. The present disclosure has no particular limitation on the positive binder, as long as the purpose of the present disclosure can be achieved. For example, the positive binder may include, but is not limited to, at least one of fluorine-containing resin, polypropylene resin, fiber-type binder, rubber-type binder, polyimide-type binder, or polyvinylidene fluoride (PVDF).

The present disclosure also provides a sodium-ion battery. The sodium-ion battery includes the positive electrode plate according to any one of the above embodiments.

The sodium-ion battery of the present disclosure further includes a negative electrode plate, a separator, and an electrolyte. The separator is positioned between the positive electrode plate and the negative electrode plate to exert the isolation effect.

The present disclosure has no particular limitation on the negative electrode plate, as long as the purpose of the present disclosure can be achieved. For example, the negative electrode plate includes a negative current collector and a negative active material layer. The negative active material layer may be disposed on a surface of the negative current collector. That is, the negative active material layer may be arranged on a partial area of one surface of the negative current collector, or may be arranged on the entire area of one surface of the negative current collector. The present disclosure has no particular limitation on the negative current collector, as long as the purpose of the present disclosure can be achieved. For example, the negative current collector may include, but is not limited to, a copper foil, a copper alloy foil, a nickel foil, or a composite current collector. In the present disclosure, there is no particular limitation on the thickness of the negative current collector, as long as the purpose of the present disclosure can be achieved, for example, the thickness thereof ranges from 4 µm to 12 µm. The thickness of the negative material layer of the present disclosure may range from 70 µm to 200 µm.

In the present disclosure, the negative active material layer may further include a negative binder. The present disclosure has no particular limitation on the negative binder, as long as the purpose of the present disclosure can be achieved. For example, the negative binder may include at least one of acrylate, polyamide, polyimide, polyamide-imide, polyvinylidene fluoride, styrene-butadiene rubber, sodium alginate, polyvinyl alcohol, polytetrafluoroethylene, or sodium carboxymethyl cellulose.

In some embodiments, the material of the separator may be selected from at least one of glass fiber, non-woven fabric, polyethylene, polypropylene, or polyvinylidene fluoride. The separator may be a single-layer film or a multi-layer composite film, without any particular limitation. When the separator is the multi-layer composite film, the materials of each layer may be the same or different, without any particular limitation.

The sodium-ion battery of the present disclosure further includes an electrolyte. The present disclosure has no particular limitation on the electrolyte, and those skilled in the art may select the electrolyte based on actual needs, as long as the purpose of the present disclosure can be achieved. For example, the preparation of the electrolyte may include: obtaining a non-aqueous organic solvent by mixing at least one of ethylene carbonate (EC), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) according to a certain mass ratio or volume ratio; and then adding a sodium salt into the non-aqueous organic solvent for dissolving and even mixing. The present disclosure has no limitation on the type of the sodium salt, as long as the purpose of the present disclosure can be achieved. For example, the sodium salt may include at least one of sodium hexafluorophosphate, sodium perchlorate, sodium tetrafluoroborate, sodium trifluoromethanesulfonate, or sodium p-toluenesulfonate. The present disclosure has no particular limitation on the concentration of the sodium salt in the electrolyte, as long as the purpose of the present disclosure can be achieved. For example, the concentration of the sodium salt ranges from 1.0 mol/L to 2.0 mol/L.

The sodium-ion battery of the present disclosure further includes a housing. The present disclosure has no particular limitation on the housing, and those skilled in the art may select it according to actual needs, as long as the purpose of the present disclosure can be achieved. For example, the housing may include an aluminum plastic film.

The present disclosure has no particular limitation on the preparation method of the sodium-ion battery, and any preparation method known in the art may be selected, as long as the purpose of the present disclosure can be achieved. For example, the preparation method of the sodium-ion battery includes, but is not limited to, the following steps: sequentially stacking the positive electrode plate, the separator, and the negative electrode plate; performing winding, folding, and other operations as needed to obtain a bare battery cell with a wound structure; placing the bare battery cell in a package bag; and injecting the electrolyte into the package bag and sealing, to obtain the sodium-ion battery.

The present disclosure also provides a battery pack. The battery pack includes a casing and at least one sodium-ion battery according to any one of the above embodiments. The sodium-ion battery is accommodated in the casing. The battery pack including the battery has excellent performances, which are beneficial to the use of the battery pack. By accommodating the battery in the casing, the battery can be well fixed and protected, thereby improving service life of the battery pack. It can be understood that the battery pack may have one or more sodium-ion batteries. When the battery pack includes a plurality of sodium-ion batteries, the plurality of sodium-ion batteries may be connected in parallel and/or series.

The present disclosure also provides an electrical device. The electrical device includes the sodium-ion battery or the battery pack according to any one of the above-mentioned embodiments, which is beneficial to improving the product competitiveness and performance of the electrical device. In an optional embodiment, the electrical device includes an electrical device body, and the sodium-ion battery or the battery pack is configured to supply power to the electrical device body. In an optional embodiment, the electrical device body includes a device positive electrode and a device negative electrode. The positive electrode plate of the sodium-ion battery or the battery pack is configured to electrically connect to the device positive electrode of the electrical device body, and the negative electrode plate of the sodium-ion battery or the battery pack is configured to electrically connect to the device negative electrode of the electrical device body, to supply power to the electrical device.

The electrical device of the present disclosure may include, but is not limited to: containers, household energy storage systems, battery vehicles, electric vehicles, ships, spacecraft, electric toys, and electric tools, etc. The spacecrafts include airplanes, rockets, space shuttles, and spacecrafts, etc. The electric toys include fixed or mobile electric toys, such as electric car toys, electric ship toys, and electric airplane toys, etc. The electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers.

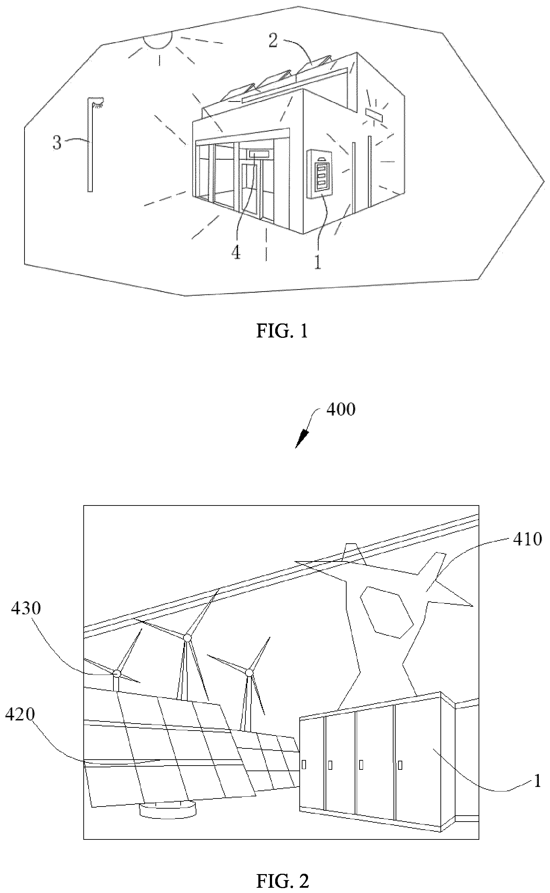

Referring to FIG. 1, FIG. 1 is a schematic structural view of a household energy storage system of an embodiment of the present disclosure. The embodiment of the present disclosure is illustrated in FIG. 1 by taking a scenario of household energy storage in user-side energy storage as an example. The energy storage device of the present disclosure is not limited to the scenario of household energy storage.

The present disclosure provides a household energy storage system. The household energy storage system includes an electric energy conversion device 2 (photovoltaic panel), a first user load 3 (street lamp), a second user load 4 (for example, household appliances such as air conditioners), etc., and an energy storage device 1. The energy storage device 1 is a small energy storage box that may be installed on an outdoor wall by wall hanging. Specifically, the photovoltaic panel can convert solar energy into electric energy during periods of low electricity prices, and the energy storage device 1 is configured to store the electric energy and supply the electric energy to the street lamp and household appliances for use during periods of high electricity prices, or to supply power in the event of a power grid outage/blackout.

Referring to FIG. 2, FIG. 2 is a schematic structural view of an energy storage system 400 of an embodiment of the present disclosure. The embodiment of the present disclosure is illustrated in FIG. 2 by taking a scenario of shared energy storage on the generation/distribution side as an example. The energy storage device 1 of the present disclosure is not limited to the scenario of shared energy storage on the generation/distribution side.

The present disclosure provides an energy storage system 400. The energy storage system 400 includes: a high-voltage cable 410, a first electric energy conversion device 420, a second electric energy conversion device 430, and an energy storage device 1 according to the present disclosure. In the case of power generation, the first electric energy conversion device 420 and the second electric energy conversion device 430 are configured to convert other forms of energy into electric energy, and they are connected to the high-voltage cable 410 and supplied to the power distribution network for use. When the power load is low and excess power is generated by the first electric energy conversion device 420 and the second electric energy conversion device 430, the excess power is stored in the energy storage device 1, thereby reducing the abandonment rates of wind and solar power and solving the problem of new energy power generation and consumption. When the power load is high, the power grid issues an instruction in order to transmit the power stored in the energy storage device 1 in conjunction with the high-voltage cable 410 in a grid-connected mode to the power consumption side, thereby providing the power grid operation with services such as peak shaving, frequency regulation, standby, and thereby sufficiently exerting the peak regulation effect on the power grid and promoting peak shaving and valley filling of the power grid. In this way, the power supply pressure of the power grid is alleviated.

Optionally, the first electric energy conversion device 420 and the second electric energy conversion device 430 can convert at least one of solar energy, light energy, wind energy, thermal energy, tidal energy, biomass energy, or mechanical energy into electric energy.

A plurality of energy storage devices 1 may be provided. The plurality of energy storage devices 1 may be connected in series or in parallel. The plurality of energy storage devices 1 are supported and electrically connected by isolation plates (not shown). In this embodiment, the term " plurality of" refers to two or more. An energy storage box may also be provided outside the energy storage device 1 for accommodating the energy storage device 1.

Optionally, the energy storage device 1 may include, but is not limited to, a battery cell, a battery module, a battery pack, a battery system, etc. The actual application form of the energy storage device 1 according to the embodiment of the present disclosure may be, but is not limited to, the listed products, and may also be other application forms. The application form of the energy storage device 1 is not strictly limited by the embodiments of the present disclosure. As an example, in the embodiments of the present disclosure, the energy storage device 1 is illustrated as a multi-core battery. When the energy storage device 1 is a battery cell, the energy storage device 1 may be at least one of a cylindrical battery, a square battery, or the like.

### Examples

Embodiments of the present disclosure will be described in more detail with reference to examples and comparative examples below. Various tests and evaluations were performed according to the following methods.

### Example 1

### <Preparation of a sodium compensation material>

30 g of commercially available sodium compensation agent Na₂C₄O₄ powder was added to a beaker containing 900 mL of deionized water, and the mixture was stirred for 30 minutes to completely dissolve the sodium compensation agent, to obtain a sodium compensation agent solution. 2,500 mL of anhydrous ethanol was added to the sodium compensation agent solution, and the mixture was stirred for 60 minutes, to generate Na₂C₄O₄ precipitate. The precipitate was filtered with anhydrous ethanol, and then washed, to obtain a bottom precipitate, which was vacuum dried at 110°C for 24 hours, to obtain recrystallized Na₂C₄O₄, i.e., Na₂C₄O₄ treated by particle size regulation, which had an average particle size D50 of 2.83 µm.

10 g of the prepared recrystallized Na₂C₄O₄ was weighed and dissolved in 75 mL of anhydrous ethanol, and a dispersion solution thereof was obtained after ultrasonic dispersion for 30 minutes. 1.6 mL of tetrabutyl titanate was added to the obtained dispersion solution, and after ultrasonic dispersion for 30 minutes, the solution was dried at 60°C to remove ethanol, to obtain a mixture. The obtained mixture was calcined at 360°C for 4 hours under a nitrogen atmosphere, and after crushing using a crusher and sieving, a sodium compensation material with a D50 of 1.12 µm was obtained. In the sodium compensation material, a mass percentage of Na₂C₄O₄ was 90%, and the remainder was titanium dioxide.

### <Preparation of a sodium compensation agent electrode plate>

The prepared sodium compensation material, a conductive agent Ketjen Black, and a binder PVDF were mixed according to a mass ratio of 60: 30: 10, a solvent N-methylpyrrolidone (NMP) was added, and the mixture was stirred evenly, to obtain a sodium compensation agent slurry with a solid content of 60%. Then, the sodium compensation agent slurry was evenly coated on an aluminum foil with a thickness of 10 µm, in which a coating thickness on one side was 20 µm. Then, the coated foil was vacuum dried at 110°C for 12 hours, to obtain a sodium compensation agent electrode plate. The obtained sodium compensation agent electrode plate was cut into discs with a diameter of 14 µm for later use.

### <Preparation of an NFPP positive electrode plate>

A positive active material Na₄Fe₃(PO₄)₂(P₂O₇) (i.e., NFPP), the prepared sodium compensation material, the conductive agent Ketjen black, and the binder PVDF were mixed according to a mass ratio of 70: 10: 10: 10, then NMP was added, and the mixture was stirred evenly, to obtain a positive electrode slurry with a solid content of 60%. The positive electrode slurry was then evenly coated on an aluminum foil with a thickness of 10 µm, in which a coating thickness on one side was 20 µm. Then, the coated foil was vacuum dried at 110°C for 12 hours, to obtain an NFPP positive electrode plate. The obtained NFPP positive electrode plate was cut into discs with a diameter of 14 µm for later use.

### <Preparation of an electrolyte>

In an argon-filled glove box with a moisture content of ≤1 ppm, ethylene carbonate (EC) and diethyl carbonate (DEC) were mixed according to a volume ratio of 1: 1. Then, sodium salt NaClO₄ was added and dissolved in the above solvent, and the mixture was mixed evenly, to obtain an electrolyte. A molar concentration of NaClO₄ in the electrolyte was 1 mol/L.

### <Preparation of a separator>

A glass fiber membrane with a thickness of 260 µm was selected as the separator.

### <Assembly of a button cell>

### <Assembly of a first button cell>

A circular sodium plate with a diameter of 14 µm was used as a counter electrode. The circular sodium compensation agent electrode plate, the separator, and the circular sodium plate prepared above were sequentially stacked, enabling the separator to be positioned between the circular sodium compensation agent electrode plate and the circular sodium plate to play a role of isolation, and then the prepared electrolyte was injected thereto. In this way, the first button cell was assembled.

### <Assembly of a second button cell>

A circular sodium plate with a diameter of 14 µm was used as a counter electrode. The NFPP positive electrode plate, the separator, and the circular sodium plate prepared above were sequentially stacked, enabling the separator to be positioned between the NFPP positive electrode plate and the circular sodium plate to play a role of isolation, and then the prepared electrolyte was injected thereto. In this way, the second button cell was assembled.

### Example 2 to Example 4

Except that the type of the sodium compensation agent in the <Preparation of a sodium compensation material> was adjusted according to Table 1, the rest was the same as Example 1.

### Example 5 to Example 7

Example 5 to Example 7 differed from Example 1 in that in <Preparation of a sodium compensation material>, the type of the precursor of the catalyst and the type of the metal oxide catalyst were adjusted according to Table 1. The rest was the same as Example 1. The precursor of the catalyst of Example 5 was cobalt 2-ethylhexanoate, the precursor of the catalyst of Example 6 was manganese diethylhexanoate, and the precursor of the catalyst of Example 7 was stannous diethylhexanoate.

### Example 8 to Example 10

Example 8 to Example 10 differed from Example 1 in that in <Preparation of a sodium compensation material>, the contents of the sodium compensation agent and the metal oxide catalyst in the sodium compensation material were adjusted according to Table 1. The rest was the same as Example 1.

### Example 11

Example 11 differed from Example 1 in that in <Preparation of a sodium compensation material>, the calcination temperature was adjusted to 400°C, and the calcination duration was adjusted to 3 hours. The rest was the same as Example 1.

### Example 12

Example 12 differed from Example 1 in that in <Preparation of a sodium compensation material>, the calcination temperature was adjusted to 500°C, and the calcination duration was adjusted to 2 hours. The rest was the same as Example 1.

### Comparative Example 1

Comparative Example 1 differed from Example 1 in that the recrystallized Na₂C₄O₄ prepared in Example 1 was directly used as the sodium compensation material. The rest was the same as Example 1.

### Comparative Example 2

Comparative Example 1 differed from Example 1 in that the commercially available sodium compensation agent Na₂C₄O₄ was directly used as the sodium compensation material. The rest was the same as Example 1.

### Comparative Example 3

Comparative Example 3 differed from Example 1 in that no sodium compensation material was prepared. That is, no first button cell was prepared, and the NFPP positive electrode plate did not contain the sodium compensation material, and thus the prepared second button cell was free of the sodium compensation material. The rest was the same as Example 1.

### <Preparation of the NFPP positive electrode plate>

The positive active material NFPP, Ketjen black, and PVDF were mixed according to a mass ratio of 80: 10: 10, then NMP was added, and the mixture was stirred evenly, to obtain a positive electrode slurry with a solid content of 60%. The positive electrode slurry was evenly coated on an aluminum foil with a thickness of 10 µm, in which a coating thickness on one side was 20 µm. Then, the coat foil was vacuum dried at 110°C for 12 hours, to obtain an NFPP positive electrode plate. The obtained NFPP positive electrode plate was cut into discs with a diameter of 14 µm for later use.

### Comparative Example 4

Comparative Example 4 differed from Example 1 in <Preparation of a sodium compensation material>. The rest was the same as Example 1.

### <Preparation of a sodium compensation material>

10 g of commercially available sodium compensation agent Na₂C₄O₄ powder was weighed and mixed with commercially available TiO₂ catalyst (Alfa-039953) according to a mass ratio of 90: 10, and a mixture was obtained by stirring evenly. The obtained mixture was used as the sodium compensation material.

### Test methods and devices

### Test of content of metallic element:

A selected area of the surface of the sodium compensation material was excited by the focused electron beam of an SEM instrument (model SU8010) to generate secondary information such as secondary electrons, backscattered electrons, and characteristic X-rays. The secondary information was collected and detected to perform quantitative composition analysis. Specifically, an arbitrary rectangular area (500 nm×500 nm) of the surface of the sodium compensation material was selected as the pre-selected region, and the first EDS test was performed on the pre-selected region, to obtain the content of the metallic element belonging to the metal oxide catalyst, which was recorded as C₀; and then a heat treatment was performed on the pre-selected region for 5 minutes at an accelerating voltage of 10 kV using an SEM device to melt the sodium compensation material in the pre-selected region, and the second EDS test was performed on the melted pre-selected region to obtain the content of the metallic element belonging to the metal oxide catalyst, which was recorded as C₁.

### Test of oxidation decomposition potential:

The first button cell was subjected to a first cycle charge and discharge test using the LAND test system to obtain a dQ/dV curve. The oxidation peak of the dQ/dV curve corresponded to the oxidation decomposition reaction of the sodium compensation material, and the potential corresponding to the oxidation peak of the dQ/dV curve was the oxidation decomposition potential of the sodium compensation material.

### Test of particle size of material:

The average particle size D50 of the sodium compensation material was tested using a laser particle size analyzer.

### Test of first cycle charge capacity and first cycle discharge capacity

At a test temperature of 25°C, the button cell was charged to 4.5 V at a constant current of 0.1 rate (C), which was a charge stage. The button cell was left to stand for 10 minutes, then discharged to 2 V at a constant current of 0.1 C, and left to stand for 10 minutes, which was a discharge stage. The charge capacity of the first charge stage was recorded as the first cycle charge capacity in mAh/g; and the discharge capacity of the first discharge stage was recorded as the first cycle discharge capacity in mAh/g.

### Test of cycle performance:

At a test temperature of 25°C, the button cell was charged to 4 V at a constant current of 0.1 C, and then discharged to 2 V at 0.1 C after standing for 10 minutes. The capacity obtained in this step was taken as an initial discharge capacity Cᵢ. A 0.1C charge/0.1C discharge cycle test was performed for 20 cycles, and the discharge capacity of the 20th cycle was recorded. Cycle capacity retention rate = (discharge capacity of the 20th cycle/initial discharge capacity Cᵢ) × 100%.

**[Table 1] Data of sodium compensation materials in respective examples and comparative examples**

| | Sodium compensation agent | | Metal oxide catalyst | | C₀ | C₁ | C₁>C₀? | D50 of sodium compensation material (µm) |
|---|---|---|---|---|---|---|---|---|
| | Type | Conte nt (%) | Type | Content (%) | | | | |
| Example 1 | Na₂C₄O₄ | 90 | TiO₂ | 10 | 5.98% | 7.21% | Yes | 1.12 |
| Example 2 | CH₃COON a | 90 | TiO₂ | 10 | 5.72% | 7.05% | Yes | 1.24 |
| Example 3 | C₆H₅Na₃O₇ | 90 | TiO₂ | 10 | 5.56% | 7.02% | Yes | 1.31 |
| Example 4 | Na₂C₂O₄ | 90 | TiO₂ | 10 | 5.34% | 6.81% | Yes | 1.24 |
| Example 5 | Na₂C₄O₄ | 90 | CO₃O₄ | 10 | 7.42% | 8.94% | Yes | 1.25 |
| Example 6 | Na₂C₄O₄ | 90 | MnO₂ | 10 | 6.12% | 7.15% | Yes | 1.11 |
| Example 7 | Na₂C₄O₄ | 90 | SnO₂ | 10 | 7.58% | 8.89% | Yes | 1.23 |
| Example 8 | Na₂C₄O₄ | 70 | TiO₂ | 30 | 2.95% | 4.37% | Yes | 1.32 |
| Example 9 | Na₂C₄O₄ | 80 | TiO₂ | 20 | 12.26 % | 13.88 % | Yes | 1.33 |
| Example 10 | Na₂C₄O₄ | 95 | TiO₂ | 5 | 2.95% | 3.08% | Yes | 1.44 |
| Example 11 | Na₂C₄O₄ | 90 | TiO₂ | 10 | 5.87% | 7.35% | Yes | 1.27 |
| Example 12 | Na₂C₄O₄ | 90 | TiO₂ | 10 | 5.93% | 7.27% | Yes | 1.42 |
| Comparative Example 1 | Na₂C₄O₄ | 100 | / | 0 | / | / | / | 1.22 |
| Comparative Example 2 | Na₂C₄O₄ | 100 | / | 0 | / | / | / | 1.29 |
| Comparative Example 3 | / | / | / | / | / | / | / | 1.08 |
| Comparative Example 4 | Na₂C₄O₄ | 90 | TiO₂ | 10 | 5.94% | 5.92% | No | 1.26 |

| | | | | | | | | |
|---|---|---|---|---|---|---|---|---|
| In Table 1, "/" indicates no relevant preparation parameter. | | | | | | | | |

**[Table 2] Data of performances of first button cell in various examples and comparative examples**

| | First cycle charge capacity (mAh/g) | dQ/dV oxidation peak potential (V) |
|---|---|---|
| Example 1 | 323.4 | 4.10 |
| Example 2 | 313.7 | 4.13 |
| Example 3 | 311.2 | 4.12 |
| Example 4 | 312.3 | 4.15 |
| Example 5 | 320.8 | 4.13 |
| Example 6 | 280.7 | 4.15 |
| Example 7 | 268.4 | 4.15 |
| Example 8 | 320.9 | 4.10 |
| Example 9 | 321.2 | 4.11 |
| Example 10 | 300.8 | 4.20 |
| Example 11 | 307.7 | 4.16 |
| Example 12 | 305.6 | 4.15 |
| Comparative Example 1 | 231.7 | 4.25 |
| Comparative Example 2 | 174.9 | 4.31 |
| Comparative Example 3 | / | / |
| Comparative Example 4 | 270.5 | 4.23 |

| | | |
|---|---|---|
| In Table 2, "/" indicates no relevant test parameter. | | |

In combination with Table 1 and Table 2, it can be seen from Example 1, Comparative Example 1, and Comparative Example 2 that
when the commercially available sodium compensation agent was simply subjected to a recrystallization treatment and then used as the sodium compensation material (for example, in Comparative Example 1), or when the commercially available sodium compensation agent was directly used as the sodium compensation material (for example, in Comparative Example 2), two EDS tests reveal that the sodium compensation materials of Comparative Example 1 and Comparative Example 2 do not contain metallic elements belonging to the metal oxide catalyst and do not have a composite structure that the metal oxide catalyst is coated with the sodium compensation agent, which can be attributed to the fact that the sodium compensation materials of Comparative Example 1 and Comparative Example 2 contain no metal oxide catalyst. Moreover, for the sodium compensation materials of Comparative Example 1 and Comparative Example 2, the oxidation decomposition potential is high, and the first cycle charge capacity of the first button cell is relatively low. Therefore, the sodium compensation materials of Comparative Example 1 and Comparative Example 2 can hardly be improved in terms of the first cycle sodium compensation effect of the sodium compensation materials. It can be seen from Example 1 and Comparative Example 4 that when the commercially available sodium compensation agent and the commercially available TiO₂ catalyst are simply physically mixed as the sodium compensation material, the result of C₁<C₀ was obtained after two EDS tests, indicating that the sodium compensation material in Comparative Example 4 also does not have a composite structure that the metal oxide catalyst is coated with the sodium compensation agent. Moreover, for the sodium compensation material of Comparative Example 4, the oxidation decomposition potential is high, and the first cycle charge capacity of the first button cell is low. Therefore, the sodium compensation material of Comparative Example 4 can hardly be improved in terms of the first cycle sodium compensation effect of the sodium compensation material. In contrast, for the sodium compensation materials of the present disclosure, the result of C₁>C₀ was obtained after two EDS tests, indicating that the sodium compensation materials have the composite structure that the metal oxide catalyst is coated with the sodium compensation agent. In this way, for the sodium compensation materials of the present disclosure, the oxidation decomposition potential is low, and the first cycle charge capacity of the first button cell is significantly improved, thereby improving the first cycle sodium compensation effect of the sodium compensation materials.

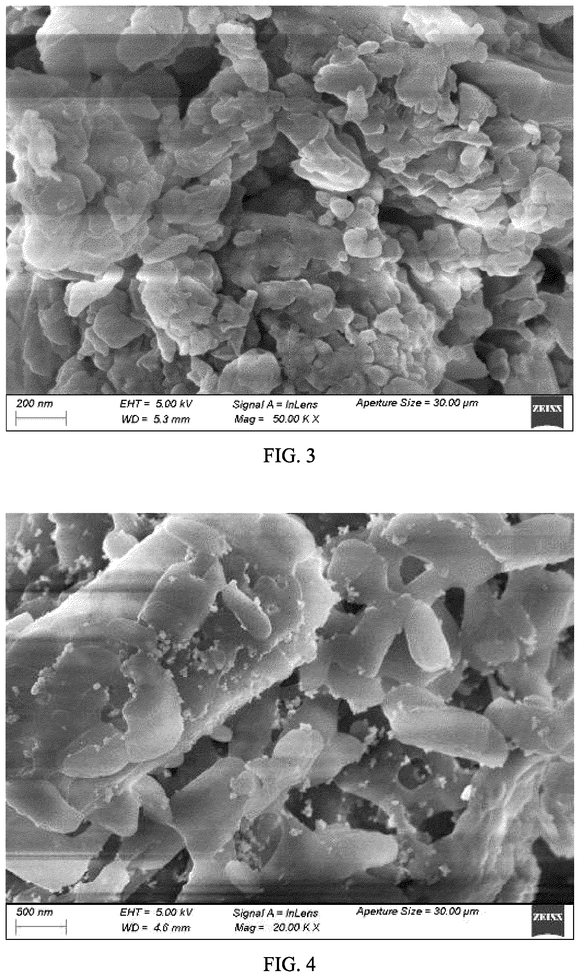

FIG. 3 is an SEM image of the sodium compensation material prepared in Example 1. FIG. 3 reveals that no obvious TiO₂ particles are present on the surface of the sodium compensation agent Na₂C₄O₄, which also confirms that the sodium compensation material of the present disclosure has the composite structure that the metal oxide catalyst is coated with the sodium compensation agent.

FIG. 4 is an SEM image of the sodium compensation material prepared in Comparative Example 4. FIG. 4 reveals that the TiO₂ particles are only dispersed on the surface of the sodium compensation agent Na₂C₄O₄, without forming a composite structure that the metal oxide catalyst is coated with the sodium compensation agent.

The type and content of the sodium compensation agent and the metal oxide catalyst as well as the particle size of the sodium compensation material can also affect the performances of the sodium-ion batteries. It can be seen from Example 2 to Example 10 that, under the premise of C₁>C₀, it is beneficial to control the type and content of the sodium compensation agent and the metal oxide catalyst as well as the particle size of the sodium compensation material within the ranges of the present disclosure, in order to obtain a sodium-ion battery with a high first cycle charge capacity.

The calcination duration and the calcination temperature can also affect the performances of the sodium-ion batteries. It can be seen from Example 11 and Example 12 that, under the premise of C₁>C₀, it is beneficial to control the calcination duration and the calcination temperature within the ranges of the present disclosure, in order to obtain a sodium-ion battery with a high first cycle charge capacity.

**[Table 3] Data of performances of second button cell in various examples and comparative examples**

| | First cycle charge capacity (mAh/g) | First cycle discharge capacity (mAh/g) | Capacity retention after 20 cycles (%) |
|---|---|---|---|
| Example 1 | 138.4 | 105.1 | 99.65 |
| Example 2 | 136.8 | 104.7 | 99.58 |
| Example 3 | 132.6 | 104.2 | 99.37 |
| Example 4 | 132.7 | 103.7 | 99.26 |
| Example 5 | 136.7 | 104.6 | 99.43 |
| Example 6 | 132.6 | 104.4 | 99.57 |
| Example 7 | 131.4 | 104.2 | 99.27 |
| Example 8 | 136.8 | 104.5 | 99.63 |
| Example 9 | 136.8 | 104.8 | 99.72 |
| Example 10 | 134.7 | 104.3 | 99.32 |
| Example 11 | 135.4 | 104.3 | 99.49 |
| Example 12 | 135.2 | 104.4 | 99.29 |
| Comparative Example 1 | 128.8 | 102.3 | 99.23 |
| Comparative Example 2 | 126.1 | 102.0 | 99.18 |
| Comparative Example 3 | 115.7 | 101.5 | 99.17 |
| Comparative Example 4 | 129.0 | 102.3 | 99.26 |

In combination with Table 1 and Table 3, based on the comparison of Example 1 with Comparative Example 1 to Comparative Example 4, when the commercially available sodium compensation agent is simply subjected to a recrystallization treatment and then used as the sodium compensation material (for example, in Comparative Example 1), or when the commercially available sodium compensation agent is directly used as the sodium compensation material (for example, in Comparative Example 2), or when the positive electrode plate does not contain the sodium compensation material (for example, in Comparative Example 3), or when the commercially available sodium compensation agent is physically mixed with the commercially available TiO₂ catalyst as the sodium compensation material (for example, in Comparative Example 4), due to the fact that the sodium compensation materials of Comparative Example 1, Comparative Example 2, and Comparative Example 4 do not have a composite structure that the metal oxide catalyst is coated with the sodium compensation agent and the fact that the positive electrode plate of Comparative Example 3 does not contain the sodium compensation material, the first cycle charge capacity and the first cycle discharge capacity of the second button cell are both low, resulting in low first cycle coulomb efficiency, which is not conducive to the improvement of the energy density and cycle performance of the sodium-ion battery. In contrast, the second button cell of the present disclosure is significantly improved in terms of the first cycle charge capacity, the first cycle discharge capacity, and the capacity retention rate after 20 cycles, which is conducive to the improvement of the energy density and cycle performance of the sodium-ion battery.

The type and content of the sodium compensation agent and the metal oxide catalyst as well as the particle size of the sodium compensation material can also affect the performances of the sodium-ion batteries. It can be seen from Example 2 to Example 10 that, under the premise of C₁>C₀, it is beneficial to control the type and content of the sodium compensation agent and the metal oxide catalyst as well as the particle size of the sodium compensation material within the ranges of the present disclosure, in order to obtain an NFPP sodium-ion battery with high first cycle charge capacity, high first cycle discharge capacity, and excellent cycle performance.

The calcination duration and the calcination temperature can also affect the performances of the sodium-ion batteries. It can be seen from Example 11 and Example 12 that, under the premise of C₁>C₀, it is beneficial to control the calcination duration and the calcination temperature within the ranges of the present disclosure, in order to obtain an NFPP sodium-ion battery with high first cycle charge capacity, high first cycle discharge capacity, and excellent cycle performance.

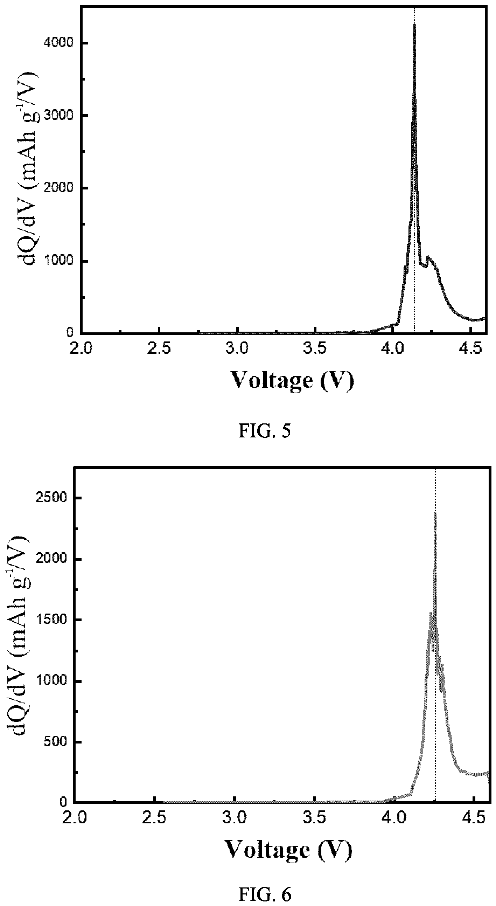

FIG. 5 is a differential capacity dQ/dV curve graph of a first button cell of Example 1 during a first cycle charge process. FIG. 6 is a differential capacity dQ/dV curve graph of a first button cell of Comparative Example 1 during a first cycle charge process. As can be seen from FIG. 5, the oxidation peak potential of Example 1 is 4.12 V; and as can be seen from FIG. 6, the oxidation peak potential of Comparative Example 1 is 4.25 V, indicating that the sodium compensation material of the present disclosure has a lower oxidation decomposition potential, which is beneficial to improving the first cycle sodium compensation effect.

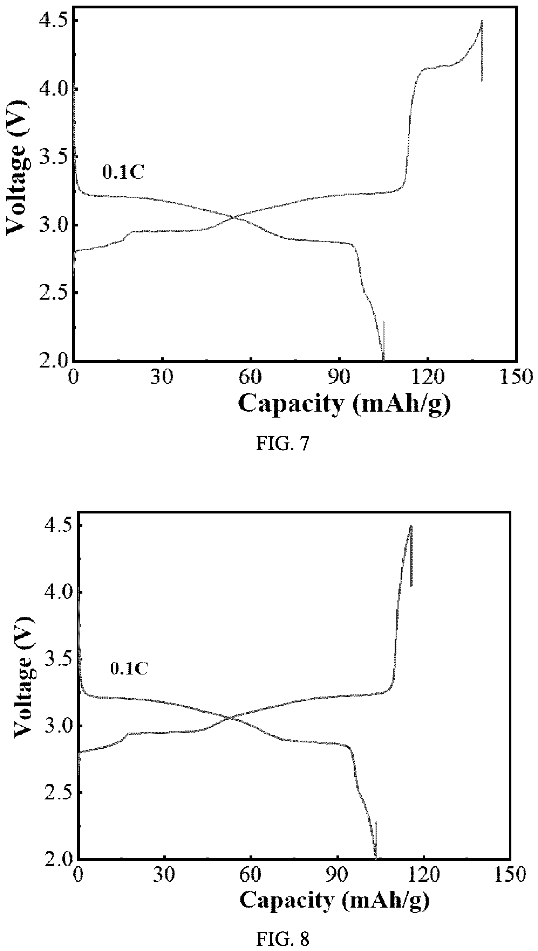

FIG. 7 is a first cycle charge and discharge curve of a second button cell of Example 1. FIG. 8 is a first cycle charge and discharge curve of a second button cell of Comparative Example 3. As can be seen from FIG. 7, the first cycle charge capacity of the second button cell of Example 1 is increased to 138.4 mAh/g, and an oxidation platform is present at about 4.12 V. The capacity provided by the oxidation platform corresponds to the oxidation decomposition process of the sodium compensation material. As can be seen from FIG. 8, the first cycle charge capacity of Comparative Example 3 is 115.7 mAh/g, and oxidation platforms are present at about 2.8 V, 2.95 V and 3.28 V, corresponding to Na release processes at Na3 site, Na1 site, and Na4 site, respectively. Furthermore, the first cycle discharge specific capacity of Example 1 is 105.1 mAh/g, the first cycle discharge specific capacity of Comparative Example 3 is 101.5 mAh/g, and the capacity retention rate after 20 cycles of Example 1 is also enhanced compared with Comparative Example 1, which indicates that the addition of the sodium compensation material of the present disclosure will not affect the structure of the NFPP positive electrode plate during subsequent cycles and may even play a positive role. In view of the above, the sodium compensation material of the present disclosure can effectively compensate for the first cycle sodium loss of the NFPP positive electrode plate, exhibiting good compatibility with the NFPP positive electrode plate, which is beneficial to the improvement of the energy density and cycle performance of the sodium-ion batteries.

The sodium compensation material, the preparation method thereof, the positive electrode plate, and the sodium-ion battery according to the embodiments of the present disclosure are described in detail above. Specific examples are used herein to illustrate the principles and embodiments of the present disclosure. The description of the above embodiments is only used to help understand the technical solutions and core inventions of the embodiments of the present disclosure. At the same time, those skilled in the art, based on the concept of the present disclosure, can make changes to the specific embodiments and the scope of application. In summary, the content of the present disclosure should not be interpreted as limitations of the present disclosure.

## Claims

1. A sodium compensation material, comprising:
a sodium compensation agent NaₓC_{y}O_{z}H_{w}, where 1≤x≤3, 1≤y≤6, 1≤z≤7, 0≤w≤5; and
a metal oxide catalyst,
wherein the sodium compensation material satisfies C₁>C₀, where:
C₀ represents a content of a metallic element belonging to the metal oxide catalyst measured by performing a first Energy Dispersive Spectroscopy (EDS) test on a pre-selected region of a surface of the sodium compensation material; and
C₁ represents a content of the metallic element belonging to the metal oxide catalyst measured by performing a second EDS test on the pre-selected region after being melted.

2. The sodium compensation material according to claim 1, wherein the sodium compensation material has a composite structure of the metal oxide catalyst coated with the sodium compensation agent.

3. The sodium compensation material according to claim 1, wherein an oxidation decomposition potential Eₚₐ of the sodium compensation material satisfies 4.10 V≤Eₚₐ≤4.20 V.

4. The sodium compensation material according to claim 1, wherein an average particle size D50 of the sodium compensation material ranges from 0.8 µm to 2 µm.

5. The sodium compensation material according to claim 1, wherein, based on a mass of the sodium compensation material:
a mass percentage of the sodium compensation agent ranges from 70% to 95%, and
a mass percentage of the metal oxide catalyst ranges from 5% to 30%.

6. The sodium compensation material according to any one of claims 1 to 5, wherein the sodium compensation agent is selected from at least one of CH₃COONa, C₆H₅Na₃O₇, Na₂C₄O₄, Na₂CO₃, Na₂C₂O₄, or Na₂C₆O₆; and
wherein the metal oxide catalyst is selected from at least one of titanium dioxide, ruthenium dioxide, manganese dioxide, molybdenum dioxide, tricobalt tetraoxide, triiron tetraoxide, or tin dioxide.

7. A preparation method of the sodium compensation material according to any one of claims 1 to 6, the method comprising:
mixing a sodium compensation agent treated by particle size regulation and an alcohol-based solvent, to obtain a dispersion solution, wherein the sodium compensation agent treated by the particle size regulation has an average particle size D50 ranging from 1 µm to 3 µm;
adding a precursor of a catalyst to the dispersion solution for mixing, and drying, to obtain a mixture; and
calcining the mixture in a gas atmosphere, to obtain the sodium compensation material, wherein a calcination temperature ranges from 300°C to 500°C, and wherein a calcination duration ranges from 1 hour to 6 hours.

8. The preparation method according to claim 7, further comprising:
regulating particle size distribution of the sodium compensation agent by a recrystallization treatment, a ball milling treatment, a crushing treatment, or a spray drying treatment, to obtain the sodium compensation agent treated by particle size regulation.

9. The preparation method according to claim 7, wherein the precursor of the catalyst is selected from at least one of tetrabutyl titanate, manganese diethylhexanoate, iron diethylhexanoate, copper diethylhexanoate, cobalt 2-ethylhexanoate, nickel diethylhexanoate, or stannous diethylhexanoate.

10. The preparation method according to claim 7, wherein the alcohol-based solvent is selected from at least one of methanol, ethanol, or ethylene glycol.

11. The preparation method according to claim 7, wherein the gas atmosphere comprises any one of argon, nitrogen, and air.

12. A positive electrode plate, comprising:
a current collector; and
a positive active material layer disposed on at least one surface of the current collector,
wherein the positive active material layer comprises the sodium compensation material according to any one of claims 1 to 6 or the sodium compensation material prepared by the preparation method according to any one of claims 7 to 11.

13. A sodium-ion battery, comprising the positive electrode plate according to claim 12.

14. A battery pack, comprising:
a casing; and
at least one sodium-ion battery according to claim 13, wherein the sodium-ion battery is accommodated in the casing.

15. An electrical device, comprising:
the sodium-ion battery according to claim 13; or
the battery pack according to claim 14.
